# EUROPEAN PATENT SPECIFICATION

(11) **EP 2 300 526 B1**
(45) Date of publication and mention of the grant of the patent: **29.08.2012**
(21) Application number: 09798629.3
(22) Date of filing: 14.07.2009
(51) Int. Cl.: C08J 9/14, C08J 9/12, C08J 9/06, C08J 9/22, C08G 18/18, C08K 5/02, C08L 23/00, C08L 23/04, C08L 23/10, C08L 25/04, C08L 67/03, C08L 75/04

(54) **HFO-1234ZE MIXED ISOMERS WITH HFC-245FA AS A BLOWING AGENT, AEROSOL, AND SOLVENT**
HFO-1234ZE-GEMISCHTE ISOMERE MIT HFC-245FA ALS BLASMITTEL, AEROSOL UND LÖSUNGSMITTEL
ISOMÈRES MIXTES DE HFO-1234ZE AVEC HFC-245FA COMME AGENT D'EXPANSION, AÉROSOL, ET SOLVANT

(30) Priority: 16.07.2008 US 81089 P; 13.07.2009 US 502197
(43) Date of publication of application: 30.03.2011
(73) Proprietor: Honeywell International Inc., Morristown, NJ 07962-2245 (US)
(72) Inventor: BOWMAN, James, M., Geneva IL 60134 (US); WILLIAMS, David, J., East Amherst NY 14051 (US); SINGH, Rajiv, R., Getzville NY 14068 (US)
(74) Representative: Hucker, Charlotte Jane
(86) International application number: PCT/US2009/050487
(87) International publication number: WO 2010/009090

(56) References cited:
- KR-A- 20070 020 474
- KR-A- 20080 025 748
- US-A- 6 124 510
- US-A1- 2002 177 537
- US-A1- 2007 100 010
- US-A1- 2008 125 505

## Description

### CROSS REFERENCE TO RELATED APPLICATIONS

This application claims the benefit of U.S. provisional patent application serial number 61/081,089 filed July 16, 2008, and U.S. provisional patent application serial number 61/089,597 filed August 18,2008.

### BACKGROUND OF THE INVENTION

### Field of the Invention

The present invention relates to compositions useful as a blowing agent. More particularly, the invention relates to compositions comprising trans-1,3,3,3-tetrafluoropropene (trans-HFO-1234ze), cis-1,3,3,3-tetrafluoropropene (cis-HFO-1234ze), and 1,1,1,3,3-pentafluoropropane (HFC-245fa), and the use of such a composition as a blowing agent for forming foams.

### Description of the Related Art

Traditionally, chlorofluorocarbons (CFCs) have been used as blowing agents. In recent years, there has been widespread concern that certain chlorofluorocarbons might be detrimental to the Earth's ozone layer. As a result, there is a worldwide effort to use halocarbons which contain fewer or no chlorine substituents. Accordingly, the production of hydrofluorocarbons, or compounds containing only carbon, hydrogen and fluorine, has been the subject of increasing interest to provide environmentally desirable products for use as blowing agents. Additionally, it is advantageous if these products have a relatively short atmospheric lifetime so that their contribution to global warming is minimized. In this regard, trans-1,3,3,3-tetrafluoropropene (trans-1234ze) is a compound that has the potential to be used as a zero Ozone Depletion Potential (ODP) and a low Global Warming Potential (GWP).

It is known in the art to produce HFO-1234ze (i.e.hydrofluoroolefin-1234ze). For example, U.S. Patent 5,710,352 teaches the fluorination of 1,1,1,3,3-pentachloropropane (HCC-240fa) to form HCFC-1233zd and a small amount of HFO-1234ze. U.S. patent 5,895,825 teaches the fluorination of HCFC-1233zd to form HFC-1234ze. U.S. patent 6,472,573 also teaches the fluorination of HCFC-1233zd to form HFO-1234ze. U.S. patent 6,124,510 teaches the formation of cis and trans isomers of HFO-1234ze by the dehydrofluorination of HFC-245fa. U.S. patent 5,574,192 describes the formation of HFC-245fa via the fluorination of HCC-240fa. U.S. patent application US20080051611 teaches a process for the production of trans-1,3,3,3-tetrafluoropropene by first dehydrofluorinating 1,1,1,3,3-pentafluoropropane to thereby produce a mixture of cis-1,3,3,3-tetrafluoropropene, trans-1,3,3,3-tetrafluoropropene and hydrogen fluoride. Then optionally recovering hydrogen fluoride and then recovering trans-1,3,3,3-tetrafluoropropene.

US patent Application US-A-2008/0125505 discloses a variety of uses for fluoroalkenes, including tetrafluoropropenes, including as blowing agents. The blowing agents may contain additional components, including hydrofluorocarbons such as a pentafluoropropane.

It has now been found that the reactor output of the dehydrofluorination reaction of 1,1,1,3,3-pentafluoropropane yields a composition comprising trans-1,3,3,3-tetrafluoropropene (trans-HFO-1234ze), cis-1,3,3,3-tetrafluoropropene (cis-HFO-1234ze), and 1,1,1,3,3-pentafluoropropane (HFC-245fa) which can be directly used as a blowing agent. In the case of a vapor phase dehydrofluorination reaction, HF may also be present. The HF, should be removed by any means known in the art, before using these compositions as a blowing agent. The compositions satisfy the continuing need for alternatives to CFCs and HCFCs. The compositions have zero ozone depletion potential (ODP) and mitigate global warming potential (GWP), while providing enhanced performance in blowing agent applications. This reactor output composition is particularly attractive for use as a blowing agent in foamed thermoset plastics, especially polyurethane and polyisocyanurate insulating foam applications. The insulation characteristics of this composition, shows an improvement in processing characteristics through improved solubility and vapor pressure reduction, thereby reducing froth formation and cell formation and improving morphology. A further embodiment relates to the use of reactor output composition in pressurized one component foams. The necessarily low vapor pressure of the blowing agent system, as described by Raoult's Law, affords the use of other higher pressure and/or higher molecular weight propellants, while meeting the necessary gas volume required for adequate expansion, without exceeding the pressure capacity of the package. This reactor output composition is attractive for use as a blowing agent in foamed thermoplastics, such as polystyrene, polyethylene, polypropylene, polyethyleneterephthalate, and such. These compositions improve blowing agent solubility and, plasticization in the polymer melt during extrusion, thereby reducing pressure in the barrel and at the die. Furthermore, the cell size improves, allowing achievement of low density foams.

### SUMMARY OF THE INVENTION

The invention provides a blowing agent which comprises from 75 % to 90 % by weight trans-1,3,3,3-tetrafluoropropene, from 1 % to 25% by weight cis-1,3,3,3-tetrafluoropropene, and from 1% 15% by weight 1,1,3,3,3-pentafluoropropane.

The invention also provides a blowing agent composition which comprises i) from 50% to 95% by weight of the above blowing agent; and ii) from 5% to 50% by weight of a co-blowing agent comprising one or more component of hydrofluorocarbons, C₁ to C₆ hydrocarbons, C₁ to C₈ alcohols, ethers, diethers, aldehydes, ketones, hydrofluoroethers, C₁ to C₄ chlorocarbons, methyl formate, water, carbon dioxide, C₃ to C₄ hydrofluoroolefins, and C₃ to C₄ hydrochlorofluoroolefins.

The invention also provides a foamable composition comprising the blowing agent above and optionally the co-blowing agent above, and a foam forming component, or a combination of components, capable of forming a foam structure.

The invention further provides a method for forming a foam which comprises combining a) and b):
a) blowing agent which comprises from 75 % to 90 % by weight trans-1,3,3,3-tetrafluoropropene, from 1 % to 25% by weight cis1,3,3,3-tetrafluoropropene, and from 1% to 15% by weight 1,1,3,3,3-pentafluoropropane; and
b) a foam forming component, or a combination of components, capable of forming a foam structure.

The method may also be conducted by optionally including a co-blowing agent.

### DESCRIPTION OF THE INVENTION

In a process for dehydrofluorinating 1,1,1,3,3-pentafluoropropane, the reaction includes isomers of 1,3,3,3-tetrafluoropropene - both cis and trans, as well as unreacted 1,1,1,3,3-pentafluoropropane as the organic components. Depending on the dehydrofluorination technique used, some hydrogen fluoride may be produced. Hydrogen fluoride contamination is detrimental to use of the organic components and therefore it is removed via any route known in the art including scrubbing, distilling or extraction. The reactor output composition is controlled by the operating conditions, i.e., residence time in the reactor, temperature of the reactor, the catalyst used, the pressure of the reactor, the recycle stream composition, as well as the reactor design and configuration. The reactor output may be partially refined to remove other undesirable impurities also present due to the process or process conditions, apart from the hydrogen fluoride mentioned above. Reactor configuration, may include and is not limited to, residence time, multiple reactor stages, or multiple passes of reactants.

The catalytic dehydrofluorinating of HFC-245fa produces a result comprising cis-1,3,3,3-tetrafluoropropene, trans-1,3,3,3-tetrafluoropropene, residual HFC-245fa and possibly hydrogen fluoride. Dehydrofluorination reactions are well known in the art. Preferably dehydrofluorination of HFC-245fa is done in a vapor phase, and more preferably in a fixed-bed reactor in the vapor phase. The dehydrofluorination reaction may be conducted in any suitable reaction vessel or reactor, but it should preferably be constructed from materials which are resistant to the corrosive effects of hydrogen fluoride such as nickel and its alloys, including Hastelloy, Inconel, Incoloy, and Monel or vessels lined with fluoropolymers. These may be single or multiple reactors packed with a dehydrofluorinating catalyst which may be one or more of fluorinated metal oxides in bulk form or supported, metal halides in bulk form or supported, and carbon supported transition metals, metal oxides and halides. Suitable catalysts non-exclusively include fluorinated chromia (fluorinated Cr₂O₃), fluorinated alumina (fluorinated Al₂O₃), metal fluorides (e.g., CrF₃, AlP₃) and carbon supported transition metals (zero oxidation state) such as Fe/C, Co/C, Ni/C, Pd/C or transition metals halides. The HFC-245fa is introduced into the reactor together with an optional inert gas diluent such as nitrogen or argon. In a preferred embodiment of the invention, the HFC-245fa is pre-vaporized or preheated prior to entering the reactor. Alternately, the HFC-245fa is vaporized inside the reactor. Useful reaction temperatures may range from 100 °C to 600 °C. Preferred temperatures may range from 150 °C to 450 °C, and more preferred temperatures may range from 200 °C to 350 °C. The reaction may be conducted at atmospheric pressure, super-atmospheric pressure or under vacuum. The vacuum pressure can be from 0.7 KPa (5 torr) to 101 KPa (760 torr). Contact time of the HFC-245fa with the catalyst may range from 0.5 seconds to 120 seconds, preferably from 2 seconds to 60 seconds, and more preferably from 5 seconds to 40 seconds, however, longer or shorter times can be used.

In the preferred embodiment, the reaction process flow is in the vertically down or vertically up direction through a bed of the catalyst in the reactor tubes. It may also be advantageous to periodically regenerate the catalyst after prolonged use while in place in the reactor. Regeneration of the catalyst may be accomplished by any means known in the art, for example, by passing air or air diluted with nitrogen over the catalyst at temperatures of from 100 °C to 400 °C, preferably from 200 °C to 375 °C, for from 0.5 hour to 3 days. This is followed by either HF treatment at temperatures of from 25 °C to 400 °C, preferably from 200 °C to 350 °C for fluorinated metal oxide and metal fluoride catalysts or H₂ treatment at temperatures of from 100 °C to 400 °C, preferably from 200 °C to 350 °C for carbon supported transition metal catalysts. In this embodiment, dehydrofluorination produces some hydrogen fluoride, which is then removed. One mole of HF is produced for every mole of cis or trans-1,3,3,3-tetrafluoropropene.

In an alternate embodiment of the invention, dehydrofluorination of HFC-245fa can also be accomplished by reacting the HFC-245fa with a strong caustic solution that includes, but is not limited to KOH, NaOH, Ca(OH)₂ and CaO at an elevated temperature. In this case, the amount of the caustic in the caustic solution is of from 2 wt % to 99 wt %, more preferably from 5 wt % to 90 wt % and most preferably from 10 wt % to 80 wt %.

The reaction may be conducted at a temperature of from 20 °C to 100 °C, more preferably from 30 °C to 90 °C and most preferably from 40 °C to 80 °C. As above, the reaction may be conducted at atmospheric pressure, super-atmospheric pressure or under vacuum. The vacuum pressure can be from 0.7 KPa (5 torr) to 101 KPa (760 torr). In addition, a solvent may optionally be used to help dissolve the organic compounds in the caustic solution. This optional step may be conducted using solvents that are well known in the art for said purpose. Examples include polar solvents such as dioxamine, N-methyl pyrrolidine, and the like. When dehydrofluorination is conducted using the caustic technique, an immeasurable trace amount of hydrogen fluoride is produced. A phase transfer catalyst such as Crown ethers or tetraalkyl ammonium salts may be used, if desired.

In the embodiment wherein hydrogen fluoride is to be recovered from the result of the dehydrofluorination reaction, recovering the hydrogen fluoride is preferably conducted by passing the composition resulting from the dehydrofluorination reaction through a sulfuric acid extractor to remove hydrogen fluoride, subsequently desorbing the extracted hydrogen fluoride from the sulfuric acid, and then distilling the desorbed hydrogen fluoride. The separation may be conducted by adding sulfuric acid to the mixture while the mixture is in either the liquid or gaseous states. The usual weight ratio of sulfuric acid to hydrogen fluoride ranges from 0.1:1 to 100:1. One may begin with a liquid mixture of the fluorocarbons and hydrogen fluoride and then add sulfuric acid to the mixture.

The amount of sulfuric acid needed for the separation depends on the amount of HF present in the system. From the solubility of HF in 100% sulfuric acid as a function of a temperature curve, the minimum practical amount of sulfuric acid can be determined. For example at 30 °C. about 34 g of HF will dissolve in 100 g of 100% sulfuric acid. However, at 100 °C. only about 10 g of HF will dissolve in the 100% sulfuric acid. Preferably the sulfuric acid used in this invention has a purity of from 50% to 100%.

In the preferred embodiment, the weight ratio of sulfuric acid to hydrogen fluoride ranges from 0.1:1 to 1000:1. More preferably the weight ratio ranges from 1:1 to 100:1 and most preferably from 2:1 to 50:1. Preferably the reaction is conducted at a temperature of from 0 °C. to 100 °C., more preferably from 0 °C. to 40 °C., and most preferably from 20 °C. to 40 °C. The extraction is usually conducted at normal atmospheric pressure, however, higher or lower pressure conditions may be used by those skilled in the art. Upon adding the sulfuric acid to the mixture of fluorocarbons and HF, two phases rapidly form. An upper phase is formed which is rich in the fluorocarbons and a lower phase which is rich in HF/sulfuric acid. By the term "rich" is meant, the phase contains more than 50% of the indicated component in that phase, and preferably more than 80% of the indicated component in that phase. The extraction efficiency of the fluorocarbon by this method can range from 90% to 99%.

After the separation of the phases, one removes the upper phase rich in the fluorocarbons from the lower phase rich in the hydrogen fluoride and sulfuric acid. This may be done by decanting, siphoning, distillation or other techniques well known in the art. One may optionally repeat the fluorocarbon extraction by adding more sulfuric acid to the removed lower phase. With about a 2.25:1 weight ratio of sulfuric acid to hydrogen fluoride, one can obtain an extraction efficiency of about 92% in one step. Preferably one thereafter separates the hydrogen fluoride and sulfuric acid. One can take advantage of the low solubility of HF in sulfuric at high temperatures to recover the HF from sulfuric. For example, at 140 °C., only 4 g of HF will dissolve in 100% sulfuric acid. One can heat the HF/sulfuric acid solution up to 250 °C. to recover the HF. The HF and sulfuric acid may then be recycled. That is, the HF may be recycled to a preceding reaction for the formation of the HFC-245fa and the sulfuric acid may be recycled for use in further extraction steps.

In another embodiment of the invention, the recovering of hydrogen fluoride from the mixture of fluorocarbons and hydrogen fluoride may be conducted in a gaseous phase by a continuous process of introducing a stream of sulfuric acid to a stream of fluorocarbon and hydrogen fluoride. This may be conducted in a standard scrubbing tower by flowing a stream of sulfuric acid countercurrent to a stream of fluorocarbon and hydrogen fluoride. Sulfuric acid extraction is described, for example in U.S. Pat. No. 5,895,639, which is incorporated herein by reference. In another embodiment, removing hydrogen fluoride from the result of dehydrofluorination is conducted by passing that result through a scrubber comprising water and a caustic, followed by drying such as in a sulfuric acid drying column.

Alternatively, HF can be recovered or removed by using water or caustic scrubbers, or by contacting with a metal salt. When water extractor is used, the technique is similar to that of sulfuric acid. When caustic is used, HF is just removed from system as a fluoride salt in aqueous solution. When metal salt (e.g. potassium fluoride, or sodium fluoride) is used, it can be used neat or in conjunction with water. HF can be recovered when metal salt is used.

The result is a mixture comprised of trans-1,3,3,3-tetrafluoropropene, cis-1,3,3,3-tetrafluoropropene and unreacted HFC-245fa.

The reactor output contains from 75 weight percent to 90 weight percent trans-1,3,3,3-tetrafluoropropene, preferably from 75 weight percent to 85 weight percent trans-1,3,3,3-tetrafluoropropene, and more preferably from 75 weight percent to 80 weight percent trans-1,3,3,3-tetrafluoropropene.

The reactor output contains from 1 weight percent to 15 weight percent cis-1,3,3,3-tetrafluoropropene, preferably from 1 weight percent to 10 weight percent cis-1,3,3,3-tetrafluoropropene.

The reactor output contains from 1 to 15 weight percent 1,1,3,3,3-pentafluoropropane, preferably from 1 to 10 weight percent 1,1,3,3,3-pentafluoropropane.

It is often necessary or even desirable to mitigate the global warming potential (GWP) of blowing agent, aerosol, or solvent compositions. The reactor output embodiment as disclosed preferably has a GWP of 200 or less. More preferred is a GWP of 150 or less. In certain circumstances, the most preferred GWP of the mixture is 15 or less. As used herein, GWP is measured relative to that of carbon dioxide and over a 100 year time horizon, as defined in "The Scientific Assessment of Ozone Depletion, 2002, a report of the World Meteorological Association's Global Ozone Research and Monitoring Project," which is incorporated herein by reference. In certain preferred forms, the present compositions also preferably have an Ozone Depletion Potential (ODP) of not greater than 0.05, more preferably not greater than 0.02 and even more preferably about zero. As used herein, "ODP" is as defined in "The Scientific Assessment of Ozone Depletion, 2002, A report of the World Meteorological Association's Global Ozone Research and Monitoring Project."

A further embodiment of the reactor composition relates to maintaining nonflammability or low flammability of the blowing agent, aerosol propellant or solvent composition.

One or more co-blowing agents, co-propellants, or co-solvents are useful and provide efficacy to various applications in the form of insulation performance, pressure performance, or solubility, without deleterious effect due to molar gas volume, flammability mitigation, or GWP reduction. These co-agents include but are not limited to: one or more additional components of hydrofluorocarbons, C₁ to C₆ hydrocarbons, C₁ to C₈ alcohols, ethers, diethers, aldehydes, ketones, hydrofluoroethers, C₁ to C₄ chlorocarbons, methyl formate, water, carbon dioxide, C₃ to C₄ hydrofluoroolefins, and C₃ to C₄ hydrochlorofluoroolefins. Examples of these non-exclusively include one or more of difluoromethane, trans-1,2-dichloroethylene, difluoroethane, 1,1,1,2,2-pentafluoroethane, 1,1,2,2-tetrafluoroethane, 1,1,1,2-tetrafluoroethane, 1,1,1-trifluoroethane, 1,1-difluoroethane, fluoroethane, hexafluoropropane isomers, including HFC-236fa, pentafluoropropane isomers including HFC-245fa, heptafluoropropane isomers, including HFC-227ea, hexafluorobutane isomers, and pentafluorobutane isomers including HFC-365mfc, tetrafluoropropane isomers, and trifluoropropene isomers (HFO-1243). Specifically included are all molecules and isomers of HFO-1234, including 1,1,1,2-tetrafluoropropene (HFO-1234yf), and cis- and trans-1,2,3,3-tetrafluoropropene (HFO-1234ye), HFC-1233zd, and HFC-1225ye.

Preferred co-blowing agents non-exclusively include:
hydrocarbons, methyl formate, halogen containing compounds, especially fluorine containing compounds and chlorine containing compounds such as halocarbons, fluorocarbons, chlorocarbons, fluorochlorocarbons, halogenated hydrocarbons such as hydrofluorocarbons, hydrochlorocarbons, hydrofluorochlorocarbons, hydrofluoroolefins, hydrochlorofluoroolefins, CO₂, CO₂ generating materials such as water, and organic acids that produce CO₂ such as formic acid. Examples non-exclusively include low-boiling, aliphatic hydrocarbons such as ethane, propane(s), i.e. normal pentane, isopropane, isopentane and cyclopentane; butanes(s), i.e. normal butane and isobutane; ethers and halogenated ethers; trans 1,2-dichloroethylene, pentafluorobutane; pentafluoropropane; hexafluoropropane; and heptafluoropropane; 1-chloro-1,2,2,2-tetrafluoroethane (HCFC-124); and 1,1-dichloro-1-fluoroethane (HCFC-141b) as well as 1,1,2,2-tetrafluoroethane (HFC-134); 1,1,1,2-tetrafluoroethane (HFC-134a); 1-chloro 1,1-difluoroethane (HCFC-142b); 1,1,1,3,3-pentafluorobutane (HFC-365mfc); 1,1,1,2,3,3,3-heptafluoropropane (HCF-227ea); trichlorofluoromethane (CFC-11), dichlorodifluoromethane (CFC-12); 1,1,1,3,3,3-hexafluoropropane (HFC-236fa); 1,1,1,2,3,3-hexafluoropropane (HFC-236ea); difluoromethane (HFC-32); difluoroethane (HFC-152a); 1,1,1,3,3-pentafluoropropane (HFC-245fa); trifluoropropenes, pentafluoropropenes, chlorotrifluoropropenes, tetrafluoropropenes including 1,1,1,2-tetrafluoropropene (HFO-1234yf), 1,1,1,2,3-pentafluoropropene (HFO-1225ye), and 1-chloro-3,3,3-trifluoropropene (HCFC-1233zd). Combinations of any of the aforementioned are useful. The relative amount of any of the above noted additional co-blowing agents, as well as any additional components included in present compositions, can vary widely within the general broad scope of the present invention according to the particular application for the composition, and all such relative amounts are considered to be within the scope hereof. In preferred embodiments, co-blowing agents, co-propellants, or co-solvents are present in an amount of from 5% by weight to 50% by weight, preferably from 10% by weight to 40% by weight, and more preferably of from 10% to 20% by weight of the total blowing agent, propellant, or solvent composition.

One aspect of the present invention provides foamable compositions. As is known to those skilled in the art, foamable compositions generally include one or more foam forming agents capable of forming a foam and a blowing agent.

This includes a component, or a combination on components, which are capable of forming a foam structure, preferably a generally cellular foam structure. The foamable compositions of the present invention include such components and the above described blowing agent compound in accordance with the present invention. In certain embodiments, the one or more components capable of forming foam comprise a thermosetting composition capable of forming foam and/or foamable compositions. Examples of thermosetting compositions include polyurethane and polyisocyanurate foam compositions, and also phenolic foam compositions. These include polyurethane pre-polymers, as in the example of one component foams. This reaction and foaming process may be enhanced through the use of various additives such as catalysts and surfactant materials that serve to control and adjust cell size and to stabilize the foam structure during formation. Furthermore, it is contemplated that any one or more of the additional components described above with respect to the blowing agent compositions of the present invention could be incorporated into the foamable composition of the present invention. In such thermosetting foam embodiments, one or more of the present compositions are included as or part of a blowing agent in a foamable composition, or as a part of a two or more part foamable composition, which preferably includes one or more of the components capable of reacting and/or foaming under the proper conditions to form a foam or cellular structure.

The invention provides polyol premix composition which comprises a combination of the inventive blowing agent, one or more polyols, one or more catalysts and optionally one or more surfactants. The blowing agent component is usually present in the polyol premix composition in an amount of from 1 wt.% to 30 wt.%, preferably from 3 wt.% to 25 wt.%, and more preferably from 5 wt.% to 25 wt.%, by weight of the polyol premix composition.

The polyol component, which includes mixtures of polyols, can be any polyol which reacts in a known fashion with an isocyanate in preparing a polyurethane or polyisocyanurate foam. Useful polyols comprise one or more of a sucrose containing polyol; phenol, a phenol formaldehyde containing polyol; a glucose containing polyol; a sorbitol containing polyol; a methylglucoside containing polyol; an aromatic polyester polyol; polyols derived from natural products (e.g. soy beans), glycerol; ethylene glycol; diethylene glycol; propylene glycol; graft copolymers of polyether polyols with a vinyl polymer; a copolymer of a polyether polyol with a polyurea; one or more of (a) condensed with one or more of (b):
(a) glycerine, ethylene glycol, diethylene glycol, trimethylolpropane, ethylene diamine, pentaerythritol, soy oil, lecithin, tall oil, palm oil, castor oil;
(b) ethylene oxide, propylene oxide, a mixture of ethylene oxide and propylene oxide; or combinations thereof. The polyol component is usually present in the polyol premix composition in an amount of from 60 wt.% to 95 wt.%, preferably from 65 wt.% to 95 wt.%, and more preferably from 70 wt.% to 90 wt.%, by weight of the polyol premix composition.

The polyol premix also can include a catalyst. Useful catalysts are primary amines, secondary amines or most typical tertiary amines. Useful tertiary amine catalysts non-exclusively include dicyclohexylmethylamine; ethyldiisopropylamine; dimethylcyclohexylamine; dimethylisopropylamine; methylisopropylbenzylamine; methylcyclopentylbenzylamine; isopropyl-sec-butyl-trifluoroethylamine; diethyl-(α -phenylethyl)amine, tri-n-propylamine, or combinations thereof. Useful secondary amine catalysts non-exclusively include dicyclohexylamine; t-butylisopropylamine; di-t-butylamine; cyclohexyl-t-butylamine; di-secbutylamine, dicyclopentylamine; di-(α-trifluoromethylethyl)amine; di-(α-phenylethyl)amine; or combinations thereof.

Useful primary amine catalysts non-exclusively include: triphenytmethylamine and 1,1-diethyl-n-propylamine.

Other useful amines include morpholines, imidazoles, ether containing compounds, and the like. These include
dimorpholinodiethylether
N-ethylmorpholine
N-methylmorpholine
bis(dimethylaminoethyl) ether
imidizole
n-methylimidazole
1,2-dimethylimidazole
dimorpholinodimethylether
N,N,N',N',N",N"-pentamethyldiethylenetriamine
N,N,N',N',N",N"-pentaethyldiethylenetriamine
N,N,N',N',N",N"-pentamethyldipropylenetriamine
bis(diethylaminoethyl) ether
bis(dimethylaminopropyl) ether.

The amine catalyst is usually present in the polyol premix composition in an amount of from 0.2 wt.% to 8.0 wt.%, preferably from 0.4 wt.% to 7.0 wt.%, and more preferably from 0.7 wt.% to 6.0 wt.%, by weight of the polyol premix composition.

The polyol premix composition may optionally further comprise a non-amine catalyst. Suitable non-amine catalysts may comprise an organometallic compound containing bismuth, lead, tin, titanium, antimony, uranium, cadmium, cobalt, thorium, aluminum, mercury, zinc, nickel, cerium, molybdenum, vanadium, copper, manganese, zirconium, sodium, potassium, or combinations thereof. These non-exclusively include bismuth nitrate, lead 2-ethylhexoate, lead benzoate, ferric chloride, antimony trichloride, antimony glycolate, stannous salts of carboxylic acids, dialkyl tin salts of carboxylic acids, potassium acetate, potassium octoate, potassium 2-ethylhexoate, glycine salts, quaternary ammonium carboxylates, alkali metal carboxylic acid salts, and N-(2-hydroxy-5-nonylphenol)methyl-N-methylglycinate, tin (II) 2-ethylhexanoate, dibutyltin dilaurate, or combinations thereof. When the optional non-amine catalyst is used, it is usually present in the polyol premix composition in an amount of from 0.01 wt.% to 2.5 wt.%, preferably from 0.05 wt.% to 2.25 wt.%, and more preferably from 0.10 wt.% to 2.00 wt.%. by weight of the polyol premix composition. While these are usual amounts, the quantity amount of metallic catalyst can vary widely, and the appropriate amount can be easily be determined by those skilled in the art.

The polyol premix composition next contains an optional silicone surfactant. The silicone surfactant is used to form a foam from the mixture, as well as to control the size of the bubbles of the foam so that a foam of a desired cell structure is obtained. Preferably, a foam with small bubbles or cells therein of uniform size is desired since it has the most desirable physical properties such as compressive strength and thermal conductivity. Also, it is critical to have a foam with stable cells which do not collapse prior to forming or during foam rise.

The polyol premix composition may optionally contain a non-silicone surfactant, such as a non-silicone, non-ionic surfactant. Such may include oxyethylated alkylphenols, oxyethylated fatty alcohols, paraffin oils, castor oil esters, ricinoleic acid esters, turkey red oil, groundnut oil, paraffins and fatty alcohols. A preferred non-silicone non-ionic surfactant is LK-443 which is commercially available from Air Products Corporation. When a non-silicone, non-ionic surfactant used, it is usually present in the polyol premix composition in an amount of from 0.25 wt.% to 3.0 wt.%, preferably from 0.5 wt.% to 2.5 wt.%, and more preferably from 0.75 wt.% to 2.0 wt. %, by weight of the polyol premix composition.

The invention also provides a method of preparing a polyurethane or polyisocyanurate foam comprising reacting an organic polyisocyanate with the polyol premix composition. The preparation of polyurethane or polyisocyanurate foams using the compositions described herein may follow any of the methods well known in the art can be employed, see Saunders and Frisch, Volumes I and II Polyurethanes Chemistry and technology, 1962, John Wiley and Sons, New York, N.Y. or Gum, Reese, Ulrich, Reaction Polymers, 1992, Oxford University Press, New York, N.Y. or Klempner and Sendijarevic, Polymeric Foams and Foam Technology, 2004, Hanser Gardner Publications, Cincinnati, OH. In general, polyurethane or polyisocyanurate foams are prepared by combining an isocyanate, the polyol premix composition, and other materials such as optional flame retardants, colorants, or other additives. These foams can be rigid, flexible, or semi-rigid, and can have a closed cell structure, an open cell structure or a mixture of open and closed cells.

It is convenient in many applications to provide the components for polyurethane or polyisocyanurate foams in pre-blended formulations. Most typically, the foam formulation is pre-blended into two components. The isocyanate and optionally other isocyanate compatible raw materials comprise the first component, commonly referred to as the "A" component. The polyol mixture composition, including surfactant, catalysts, blowing agents, and optional other ingredients comprise the second component, commonly referred to as the "B" component. In any given application, the "B" component may not contain all the above listed components, for example some formulations omit the flame retardant if flame retardancy is not a required foam property. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as nucleating agents, flame retardants, colorants, waxes, processing additives, auxiliary blowing agents, water, and even other polyols can be added as a stream to the mix head or reaction site. Most conveniently, however, they are all incorporated into one B component as described above. The blowing agent can be added to the isocyanate, or as a separate third stream to the A-side or the B-side.

A foamable composition suitable for forming a polyurethane or polyisocyanurate foam may be formed by reacting an organic polyisocyanate and the polyol premix composition described above. Any organic polyisocyanate can be employed in polyurethane or polyisocyanurate foam synthesis inclusive of aliphatic and aromatic polyisocyanates. Suitable organic polyisocyanates include aliphatic, cycloaliphatic, araliphatic, aromatic, and heterocyclic isocyanates which are well known in the field of polyurethane chemistry. These are described in, for example, U.S. patents 4,868,224; 3,401,190; 3,454,606; 3,277,138; 3,492,330; 3,001,973; 3,394,164; 3,124.605; and 3,201,372. Preferred as a class are the aromatic polyisocyanates.

Representative organic polyisocyanates correspond to the formula:

R(NCO)z

wherein R is a polyvalent organic radical which is either aliphatic, aralkyl, aromatic or mixtures thereof, and z is an integer which corresponds to the valence of R and is at least two. Representative of the organic polyisocyanates contemplated herein includes, for example, the aromatic diisocyanates such as 2,4-toluene diisocyanate, 2,6-toluene diisocyanate, mixtures of 2,4- and 2,6-toluene diisocyanate, crude toluene diisocyanate, methylene diphenyl diisocyanate, crude methylene diphenyl diisocyanate and the like; the aromatic triisocyanates such as 4,4',4"-triphenylmethane triisocyanate, 2,4,6-toluene triisocyanates; the aromatic tetraisocyanates such as 4,4'-dimethyldiphenylmethane-2,2'5,5-'tetraisocyanate, and the like; arylalkyl polyisocyanates such as xylylene diisocyanate; aliphatic polyisocyanate such as hexamethylene-1,6-diisocyanate, lysine diisocyanate methylester and the like; and mixtures thereof. Other organic polyisocyanates include polymethylene polyphenylisocyanate, hydrogenated methylene diphenylisocyanate, m-phenylene diisocyanate, naphthylene-1,5-diisocyanate, 1-methoxyphenylene-2,4-diisocyanate, 4,4'-biphenylene diisocyanate, 3,3'-dimethoxy-4,4'-biphenyl diisocyanate, 3,3'-dimethyl-4,4.'-biphenyl diisocyanate, and 3,3'-dimethyldiphenylmethane-4,4'-diisocyanate; Typical aliphatic polyisocyanates are alkylene diisocyanates such as trimethylene diisocyanate, tetramethylene diisocyanate, and hexamethylene diisocyanate, isophorene diisocyanate, 4, 4'-methylenebis(cyclohexyl isocyanate), and the like; typical aromatic polyisocyanates include m-, and p-phenylene disocyanate, polymethylene polyphenyl isocyanate, 2,4- and 2,6-toluenediisocyanate, dianisidine diisocyanate, bitoylene isocyanate, naphthylene 1,4-diisocyanate; bis(4-isocyanatophenyl)methene, bis(2-methyl-4-isocyanatophenyl)methane, and the like. Preferred polyisocyanates are the polymethylene polyphenyl isocyanates, Particularly the mixtures containing from 30 to 85 percent by weight of methylenebis(phenyl isocyanate) with the remainder of the mixture comprising the polymethylene polyphenyl polyisocyanates of functionality higher than 2. These polyisocyanates are prepared by conventional methods known in the art. In the present invention, the polyisocyanate and the polyol are employed in amounts which will yield an NCO/OH stoichiometric ratio in a range of from 0.9 to 5.0. In the present invention, the NCO/OH equivalent ratio is, preferably, 1.0 or more and 3.0 or less, with the ideal range being from 1.1 to 2.5. Especially suitable organic polyisocyanate include polymethylene polyphenyl isocyanate, methylenebis(phenyl isocyanate), toluene diisocyanates, or combinations thereof. In the preparation of polyisocyanurate foams, trimerization catalysts are used for the purpose of converting the blends in conjunction with excess A component to polyisocyanurate-polyurethane foams. The trimerization catalysts employed can be any catalyst known to one skilled in the art, including, but not limited to, glycine salts, tertiary amine trimerization catalysts, quaternary ammonium carboxylates, and alkali metal carboxylic acid salts and mixtures of the various types of catalysts. Preferred species within the classes are potassium acetate, potassium octoate, and N-(2-hydroxy-5-nonylphenol)methyl-N-methylglycinate.

Conventional flame retardants can also be incorporated, preferably in amount of not more than 20 percent by weight of the reactants. Optional flame retardants include tris(2-chloroethyl)phosphate, tris(2-chloropropyl)phosphate, tris(2,3-dibromopropyl)phosphate, tris(1,3-dichloropropyl)phosphate, tri(2-chloroisopropyl)phosphate, tricresyl phosphate, tri(2,2-dichloroisopropyl)phosphate, diethyl N,N-bis(2-hydroxyethyl) aminomethylphosphonate, dimethyl niethylphosphonate, tri(2,3-dibromopropyl)phosphate, tri(1,3-dichloropropyl)phosphate, and tetra-kis-(2-chloroethyl)ethylene diphosphate, triethylphosphate, diammonium phosphate, various halogenated aromatic compounds, antimony oxide, aluminum trihydrate, polyvinyl chloride, melamine, and the like. Other optional ingredients can include from 0 to 7 percent water, which chemically reacts with the isocyanate to produce carbon dioxide. This carbon dioxide acts as an auxiliary blowing agent. Formic acid is also used to produce carbon dioxide by reacting with the isocyanate and is optionally added to the "B"component.

In addition to the previously described ingredients, other ingredients such as, dyes, fillers, pigments and the like can be included in the preparation of the foams. Dispersing agents and cell stabilizers can be incorporated into the present blends. Conventional fillers for use herein include, for example, aluminum silicate, calcium silicate, magnesium silicate, calcium carbonate, barium sulfate, calcium sulfate, glass fibers, carbon black and silica. The filler, if used, is normally present in an amount by weight ranging from 5 parts to 100 parts per 100 parts of polyol. A pigment which can be used herein can be any conventional pigment such as titanium dioxide, zinc oxide, iron oxide, antimony oxide, chrome green, chrome yellow, iron blue siennas, molybdate oranges and organic pigments such as para reds, benzidine yellow, toluidine red, toners and phthalocyanines.

The polyurethane or polyisocyanurate foams produced can vary in density from 0.01 kg/l (0.5 pounds per cubic foot) to 0.96 kg/l (60 pounds per cubic foot), preferably from 0.02 to 0.32 kg/l (1.0 to 20.0 pounds per cubic foot), and most preferably from 0.02(4) to 0.10 kg/l (1.5 to 6.0 pounds per cubic foot). The density obtained is a function of how much of the blowing agent or blowing agent mixture disclosed in this invention plus the amount of auxiliary blowing agent, such as water or other co-blowing agents is present in the A and / or B components, or alternatively added at the time the foam is prepared. These foams can be rigid, flexible, or semi-rigid foams, and can have a closed cell structure, an open cell structure or a mixture of open and closed cells. These foams are used in a variety of well known applications, including but not limited to thermal insulation, cushioning, flotation, packaging, adhesives, void filling, crafts and decorative, and shock absorption.

In certain other embodiments of the present invention, the one or more components capable of foaming comprise thermoplastic materials, particularly thermoplastic polymers and/or resins. Examples of thermoplastic foam components include polyolefins, such as for example monovinyl aromatic compounds of the formula Ar-CHCH₂ wherein Ar is an aromatic hydrocarbon radical of the benzene series such as polystyrene (PS). Other examples of suitable polyolefin resins in accordance with the invention include the various ethylene based polymers including the ethylene homopolymers such as polyethylene and ethylene copolymers, polypropylene based polymers and polyethyleneterephthalate polymers. In certain embodiments, the thermoplastic foamable composition is an extrudable composition.

It will be generally appreciated by those skilled in the art, especially in view of the disclosure herein, that the order and manner in which the blowing agent of the present disclosure is added to the foamable composition does not generally affect the operability of any of the applications of the present disclosure.

The following non-limiting examples serve to illustrate the invention.

### EXAMPLE 1

### HFC- 245fa Dehydrofluorination over fluorinated Cr₂O₃

The catalyst used in this example was 20 cc of fluorined chromia catalyst (fluorinated Cr₂O₃). A >99% pure HFC-245fa feed was passed over this catalyst at a rate of 12 g/h at a temperature which ranged from 250 °C to 350 °C. As shown in Table 1, with increasing reaction temperature from 250 °C to 350 °C, the HFC-245fa conversion was increased from 65.2 to 96.0%, while the selectivity to trans-1234ze was slightly decreased from 84.7 to 80.6 %. At 250 °C, trans/cis-1234ze appeared to be the only products. At 350 °C, after an activation period of about 8 hours, the conversion of HFC-245fa and the selectivity to trans-1234ze remained at the same levels during the period of the study which lasted for 72 hours. These results indicate that the fluorinated Cr₂O₃ catalyst is very active and selective for converting HFC-245fa to cis-1234ze and trans-1234ze and the catalyst has very high stability.

**TAB LE 1**

| Effect of reaction temperature on the performance of "Fluorinated Chromia Catalyst" during HFC-245fa dehydrofluorination | | | | | |
|---|---|---|---|---|---|
| Temp. (°C) | HFC-245fa conversion, % | trans-1234ze selectivity % | cis-1234ze selectivity % | unknown selectivity % | trans-1234ze kg/hr/l (lbs./hr./ft³) |
| 350 | 96.0 | 80.6 | 18.0 | 1.4 | 333 (26.0) |
| 300 | 90.2 | 83.0 | 16.8 | 0.2 | 321 (25.1) |
| 275 | 81.5 | 83.9 | 16.0 | 0.1 | 294 (23.0) |
| 250 | 65.2 | 84.7 | 15.3 | 0.0 | 237 (18.5) |

| | | | | | |
|---|---|---|---|---|---|
| Reaction conditions: 20 cc catalyst, 12 g/h HFC-245fa, 101KPa (1 atm). | | | | | |

### EXAMPLE 2

### HFC- 245fa dehydrofluorination over metal fluoride catalysts

The catalysts used in this example include three metal fluoride catalysts, namely, AlF₃, FeF₃, and 10%MgF₂-90%AlF₃. 20 cc of each catalyst was used during reaction. A >99% pure HFC-245fa feed was passed over each of the three catalysts at a rate of 12 g/hour at 350 °C. As shown in Table 2, both AlF₃ and 10%MgF₂-90%AlF₃ provided high activity (> 95% HFC-245fa conversion) for HFC-245 dehydrofluorination, while FeF₃ exhibited much lower activity (< 60% HFC-245fa conversion). The selectivity to HFO-trans-1234ze over the AlF₃ and 10%MgF₂-90%AlF₃ catalysts was about 80% at 350 °C.

**TABLE 2**

| HFC-245fa dehydrofluorination over metal fluoride catalysts | | | | | |
|---|---|---|---|---|---|
| Catalyst | HFC-245fa Conversion % | trans-1234ze selectivity % | cis-1234ze selectivity % | unknown selectivity % | trans-1234ze kg/hr/l (lbs/hr/fr³) |
| AlF₃ | 96.8 | 80.4 | 16.3 | 3.3 | 335 (26.2) |
| FeF₃ | 55.4 | 78.3 | 21.1 | 0.6 | 187 (14.6) |
| 10%MgF₂-90%AlF₃ | 98.3 | 78.6 | 17.5 | 4.0 | 333 (26.0) |

| | | | | | |
|---|---|---|---|---|---|
| Reaction conditions: 20 cc catalyst, 12 g/h HFC-245fa, 350 °C, 101 KPa (1 atm) | | | | | |

### EXAMPLE 3

### HFC- 245fa dehydrofluorinaton over activated carbon supported metal catalysts

The catalysts used in Example 3 include three activated carbon supported metal catalysts, namely, 0.5 wt% Fe/AC, 0.5 wt% Ni/AC, and 5.0 wt% Co/AC. 20 cc of each catalyst was used during reaction. A >99% pure HFC-245fa feed was passed over each of the three catalysts at a rate of 12 g/h at 350°C. As shown in Table 3, among the activated carbon supported non-precious metal catalysts, iron exhibited the highest activity.

At a reaction temperature of 525°C the 0.5 wt% Fe/AC catalyst provided a cis/trans-1234ze selectivity of about 91% and a HFC-245fa conversion of about 80%.

**TABLE 3**

| HFC-245fa dehydrofluorination over activated carbon supported metal catalysts at 525°C | | | | | |
|---|---|---|---|---|---|
| Catalyst | HFC-245fa Conversion % | trans-1234ze selectivity % | cis-1234ze selectivity % | unknown selectivity % | trans-1234ze kg/hr/l (lbs/hr/ft³) |
| 0.5 wt% Fe/AC | 80.0 | 67.8 | 23.4 | 8.8 | 233 (18.2) |
| 0.5 wt% Ni/AC | 24.8 | 46.6 | 16.6 | 36.8 | 49.9 (3.9) |
| 5.0 wt% Co/AC | 10.9 | 20.1 | 7.2 | 72.7 | 9.0 (0.7) |

| | | | | | |
|---|---|---|---|---|---|
| Reaction conditions: 20 cc catalyst, 12 g/h HFC-245fa, 525 °C, 101 KPa (atm) | | | | | |

### EXAMPLE 4

HFC-245fa is added to a reactor that contains a 20 wt% KOH solution at 70 °C, and the pressure is monitored. The mole ratio of KOH to HFC-245fa is kept between 1.5 and 10.0. The caustic extracts HF for HFC-245fa and forms KF. The simultaneous increase in pressure indicates that the low boiling point HFO-1234ze isomers are forming. The reaction is essentially complete in 24 hours. The volatile gases are collected and analyzed by gas chromatography and are found to consist of the trans- and cis- isomers ofHFO-1234ze in an approximately 4:1 ratio, along with some unreacted HFC-245fa.

### EXAMPLE 5 (FOAM TEST)

A polyol (B Component), formulation is made up of 100 parts by weight of a polyol blend, 1.5 parts by weight Niax L6900 silicone surfactant, 1.5 parts by weight water, 1.2 parts by weight N,N,N',N',N",N"-pentamethyldiethylenetriamine (sold as Polycat 5 by Air Products and Chemicals) catalyst, 2.4 parts by weight of isocaproic acid, and 8 parts by weight of a blowing agent comprising trans-1,3,3,3-tetrafluoropropene, cis-1,3,3,3-tetrafluoropropene, and 1,1,1,3,3-pentafluoropropane. The total B component composition, when freshly prepared and combined with 120.0 parts by weight of Lupranate M20S polymeric isocyanate yields a good quality foam with a fine and regular cell structure. Foam reactivity is typical for a pour in place foam with a gel time of 105 seconds. The total B-side composition (114.6 parts) was then aged at 49°C (120 °F) for 62 hours, and then combined with 120.0 parts of M20S Iso polyisocyanate to make a foam. The foam is normal in appearance without cell collapse. Gel time is 150 seconds.

### EXAMPLE 6

A blowing agent is prepared which comprises 70 wt.% of trans-1,3,3,3-tetrafluoropropene, 5 wt % of cis-1,3,3,3-tetrafluoropropene, 10 wt.% of 1,1,1,3,3-pentafluoropropane, and 15 wt.% of one or more components of hydrofluorocarbons, C₁ to C₆ hydrocarbons, C₁ to C₈ alcohols, ethers, diethers, aldehydes, ketones, hydrofluoroethers, C₁ to C₄chlorocarbons, methyl formate, carbon dioxide, C₃ to C₄ hydrofluoroolefins, and C₃ to C₄ hydrochlorofluoroolefins. The blowing agent is separately combined with a polystyrene, polyethylene, polypropylene, or polyethyleneterephthalate and yields a good quality thermoplastic foam with a fine and regular cell structure.

### EXAMPLE 7

A blowing agent is prepared which comprises 75 wt.% of trans-1,3,3,3-tetrafluoropropene, 7 wt.% of cis-1,3,3,3-tetrafluoropropene, 13 wt.% of 1,1,1,3,3-pentafluoropropane, and 5 wt.% of one or more components of hydrofluorocarbons, C₁ to C₆ hydrocarbons, C₁ to C₈ alcohols, ethers, diethers, aldehydes, ketones, hydrofluoroethers, C₁ to C₄ chlorocarbons, methyl formate, water, carbon dioxide, C₃ to C₄ hydrofluoroolefins, and C₃ to C₄ hydrochlorofluoroolefins. The blowing agent is separately combined with a polyurethane or polyisocyanurate and yields a good quality thermoset foam with a fine and regular cell structure.

### EXAMPLE 8 - POLYSTYRENE FOAM

This example demonstrates a blowing agent for polystyrene foam formed in a twin screw type extruder. The apparatus employed in this example is a Leistritz twin screw extruder having the following characteristics:
30 mm co-rotating screws
L:D Ratio = 40:1

A blowing agent is prepared which comprises 90 wt.% of trans-1,3,3,3-tetrafluoropropene, 5 wt.% of cis-1,3,3,3-tetrafluoropropene, and 5 wt.% of 1,1,1,3,3-pentafluoropropane. The extruder is divided into 10 sections, each representing a L:D of 4:1. The polystyrene resin is introduced into the first section, the blowing agent is introduced into the sixth section, with the extrudate exiting the tenth section. The extruder operates primarily as a melt /mixing extruder. A subsequent cooling extruder is connected in tandem, for which the design characteristics are:
Leistritz twin screw extruder
40 mm co-rotating screws
L:D Ratio = 40:1
Die: 5.0 mm circular

Polystyrene resin, namely Nova Chemical - general extrusion grade polystyrene, identified as Nova 1600, is feed to the extruder under the conditions indicated above. The resin has a melt temperature of 191 -274 °C (375 °F - 525 °F). The pressure of the extruder at the die is about 9101 KPa (1320 pounds per square inch, (psi), and the temperature at the die is about 115 °C. The blowing agent is added to the extruder at the location indicated above, with about 0.5% by weight of talc being included, on the basis of the total blowing agent, as a nucleating agent. Foam is produced using the blowing agent at concentrations of 10% by weight, 12% by weight, and 14% by weight. The density of the foam produced is in the range of about 0.1 grams per cubic centimeter to 0.07 grams per cubic centimeter, with a cell size of about 49 to about 68 microns. The foams, of approximately 30 millimeters diameter, are visually of very good quality, very fine cell size, with no visible or apparent blow holes or voids.

### EXAMPLE 9 POLYURETHANE FOAM

Example 8 is repeated except a composition capable of forming a polyurethane foam is employed and yields a good quality polyurethane foam with a fine and regular cell structure.

### EXAMPLE 10 POLYISOCYANURATE FOAM

Example 8 is repeated except a composition capable of forming a polyisocyanurate foam is employed and yields a good quality polyisocyanurate foam with a fine and regular cell structure.

### EXAMPLE 11 PHENOLIC FOAM

Example 8 is repeated except a composition capable of forming a phenolic foam is employed and yields a good quality phenolic foam with a fine and regular cell structure.

### EXAMPLE 12 THERMOPLASTIC FOAMS

Example 8 is repeated except a composition capable of forming a thermoplastic foam is employed. The following components are separately employed: a monovinyl aromatic compound, an ethylene-based compounds, a propylene-based polymer, polystyrene, an ethylene homopolymer, polypropylene, and polyethyleneterephthalate. Good quality thermoplastic polyolefin foams with a fine and regular cell structure result.

While the present invention has been particularly shown and described with reference to preferred embodiments, it will be readily appreciated by those of ordinary skill in the art that various changes and modifications may be made without departing from the spirit and scope of the invention. It is intended that the claims be interpreted to cover the disclosed embodiment, those alternatives which have been discussed above and all equivalents thereto.

## Claims

1. A blowing agent which comprises from 75 % to 90 % by weight trans-1,3,3,3-tetraffuoropropene, from 1 % to 15% by weight cis-1,3,3,3-tetrafluoropropene, and from 1% 15% by weight 1,1,3,3,3-pentafluoropropane.

2. The blowing agent of claim 1 which comprises from 75 % to 85 % by weight trans-1,3,3,3-tetrafluoropropene.

3. The blowing agent of claim 1 which comprises from 1% to 1.0 % by weight percent cis-1,3,3,3-tetrafluoropropene.

4. The blowing agent of claim 1 which comprises from 75 % to 85 % by weight trans-1,3,3,3-tetrafluoropropene, from 1% to 10 % by weight cis- . 1,3,3,3-tetrafluoropropene and 1% to 10 % by weight 1,1,3,3,3-pentafluoropropane.

5. The blowing agent of claim 1 which has a Global Warming Potential of 200 or less.

6. A blowing agent composition which comprises
i) from 50% to 95% by weight of the blowing agent of claim 1; and
ii) from 5% to 50% by weight of a co-blowing agent comprising one or more component of hydrofluorocarbons, C₁ to C₆ hydrocarbons, C₁ to C₈ alcohols, ethers, diethers, aldehydes, ketones, hydrofluoroethers, C₁ to C₄ chlorocarbons, methyl formate, water, carbon dioxide, C₃ to C₄ hydrofluoroolefins, and C₃ to C₄ hydrochlorofluoroolefins.

7. A foamable composition comprising the blowing agent of claim 1 and
a foam forming component, or a combination of components, capable of forming a foam structure.

8. The foamable composition of claim 7 wherein said foam forming component, or a combination of components, capable of forming a foam structure comprises at least one thermosetting component.

9. The foamable composition of claim 8 wherein said at least one thermosetting component comprises a composition capable of forming a polyurethane foam.

10. The foamable composition of claim 8 wherein said at least one thermosetting component comprises a composition capable of forming a polyisocyanurate foam.

11. The foamable composition of claim 8 wherein said at least one thermosetting component comprises a composition capable of forming phenolic foam.

12. The foamable composition of claim 7 wherein said foam forming component, or a combination of components, capable of forming a foam structure comprises at least one thermoplastic component.

13. The foamable composition of claim 12 wherein said at least one thermoplastic component comprises a polyolefin.

14. A method for forming a foam which comprises combining a) and b):
a) blowing agent which comprises from 75 % to 90 % by weight trans-1,3,3,3-tetrafluoropropene, from 1 % to 15% by weight cis-1,3,3,3-tetrafluoropropene, and from 1% 15% by weight 1,1,3,3,3-pentafluoropropane; and
b) a foam forming component, or a combination of components, capable of forming a foam structure.

15. A method for forming a foam which comprises combining a) and b):
a)
i) from 50% to 95% by weight of a blowing agent which comprises from 75 % to 90 % by weight trans-1,3,3,3-tetrafluoropropene, from 1 % to 15% by weight cis-1,3,3,3-tetrafluoropropene, and from 1% to 15% by weight 1,1,3,3,3-pentafluoropropane; and
ii) from 5% to 50% by weight of a co-blowing agent comprising one or more component of hydrolluorocarbons, C₁ to C₆ hydrocarbons, C₁ to C₈ alcohols, ethers, diethers, aldehydes, ketones, hydrofluoroethers, C₁ to C₄ chlorocarbons, methyl formate, water, carbon dioxide, C₃ to C₄ hydrofluoroolefins, and C₃ to C₄ hydrochlorofluoroolefins; and
b) a foam forming component, or a combination of components, capable of forming a foam structure.

## Patentansprüche

1. Treibmittel, das 75 bis 90 Gew.-% trans-1,3,3,3-Tetrafluorpropen, 1 bis 15 Gew.-% cis-1,3,3,3-Tetrafluorpropen und 1 bis 15 Gew.-% 1,1,3,3,3-Pentafluorpropan umfasst.

2. Treibmittel nach Anspruch 1, das 75 bis 85 Gew.-% trans-1,3,3,3-Tetrafluorpropen umfasst.

3. Treibmittel nach Anspruch 1, das 1 bis 10 Gew.-% cis-1,3,3,3-Tetrafluorpropen umfasst.

4. Treibmittel nach Anspruch 1, das 75 bis 85 Gew.-% trans-1,3,3,3-Tetrafluorpropen, 1 bis 10 Gew.-% cis-1,3,3,3-Tetrafluorpropen und 1 bis 10 Gew.-% 1,1,3,3,3-Pentafluorpropan umfasst.

5. Treibmittel nach Anspruch 1, das ein Treibhauspotential von 200 oder weniger aufweist.

6. Treibmittel, das
i) 50 bis 95 Gew.-% des Treibmittels nach Anspruch 1 und
ii) 5 bis 50 Gew.-% eines Co-Treibmittels, umfassend eine oder mehrere Komponenten von teilhalogenierten Fluorkohlenwasserstoffen, C₁- bis C₆-Kohlenwasserstoffen, C₁- bis C₈-Alkoholen, Ethern, Diethern, Aldehyden, Ketonen, Hydrofluorethern, vollhalogenierten C₁-C₄-Chlorkohlenwasserstoffen, Ameisensäuremethylester, Wasser, Kohlendioxid, C₃-bis C₄-Hydrofluorolefinen und C₃- bis C₄-Hydrochlorfluorolefinen,
umfasst.

7. Verschäumbare Zusammensetzung, umfassend das Treibmittel nach Anspruch 1 und eine schaumstoffbildende Komponente oder eine Kombination von Komponenten mit Befähigung zur Bildung einer Schaumstoffstruktur.

8. Verschäumbare Zusammensetzung nach Anspruch 7, wobei die schaumstoffbildende Komponente oder eine Kombination von Komponenten mit Befähigung zur Bildung einer Schaumstoffstruktur mindestens eine wärmehärtende Komponente umfasst.

9. Verschäumbare Zusammensetzung nach Anspruch 8, wobei die mindestens eine wärmehärtende Komponente eine Zusammensetzung mit Befähigung zur Bildung eines Polyurethanschaumstoffs umfasst.

10. Verschäumbare Zusammensetzung nach Anspruch 8, wobei die mindestens eine wärmehärtende Komponente eine Zusammensetzung mit Befähigung zur Bildung eines Polyisocyanuratschaumstoffs umfasst.

11. Verschäumbare Zusammensetzung nach Anspruch 8, wobei die mindestens eine wärmehärtende Komponente eine Zusammensetzung mit Befähigung zur Bildung eines phenolischen Schaumstoffs umfasst.

12. Verschäumbare Zusammensetzung nach Anspruch 7, wobei die schaumstoffbildende Komponente oder eine Kombination von Komponenten mit Befähigung zur Bildung einer Schaumstoffstruktur mindestens eine thermoplastische Komponente umfasst.

13. Verschäumbare Zusammensetzung nach Anspruch 12, wobei die mindestens eine thermoplastische Komponente ein Polyolefin umfasst.

14. Verfahren zur Bildung eines Schaumstoffs, bei dem man a) und b) kombiniert:
a) Treibmittel, das 75 bis 90 Gew.-% trans-1,3,3,3-Tetrafluorpropen, 1 bis 15 Gew.-% cis-1,3,3,3-Tetrafluorpropen und 1 bis 15 Gew.-% 1,1,3,3,3-Pentafluorpropan umfasst; und
b) eine schaumstoffbildende Komponente oder eine Kombination von Komponenten mit Befähigung zur Bildung einer Schaumstoffstruktur.

15. Verfahren zur Bildung eines Schaumstoffs, bei dem man a) und b) kombiniert:
a)
i) 50 bis 95 Gew.-% eines Treibmittels, das 75 bis 90 Gew.-% trans-1,3,3,3-Tetrafluorpropen, 1 bis 15 Gew.-% cis-1,3,3,3-Tetrafluorpropen und 1 bis 15 Gew.-% 1,1,3,3,3-Pentafluorpropan umfasst;
und
ii) 5 bis 50 Gew.-% eines Co-Treibmittels, umfassend eine oder mehrere Komponenten von teilhalogenierten Fluorkohlenwasserstoffen, C₁- bis C₆-Kohlenwasserstoffen, C₁- bis C₈-Alkoholen, Ethern,
Diethern, Aldehyden, Ketonen, Hydrofluorethern, vollhalogenierten C₁-C₄-Chlorkohlenwasserstoffen, Ameisensäuremethylester, Wasser, Kohlendioxid, C₃-bis C₄-Hydrofluorolefinen und C₃- bis C₄-Hydrochlorfluorolefinen; und
b) eine schaumstoffbildende Komponente oder eine Kombination von Komponenten mit Befähigung zur Bildung einer Schaumstoffstruktur.

## Revendications

1. Agent gonflant qui comprend de 75 % à 90 % en poids de trans-1,3,3,3-tétrafluoropropène, de 1 % à 15 % en poids de cis-1,3,3,3-tétrafluoropropène, et de 1 % à 15 % en poids de 1,1,3,3,3-pentafluoropropane.

2. Agent gonflant de la revendication 1 qui comprend de 75 % à 85 % en poids de trans-1,3,3,3-tétrafluoropropène.

3. Agent gonflant de la revendication 1 qui comprend de 1 % à 10 % en poids de cis-1,3,3,3-tétrafluoropropène.

4. Agent gonflant de la revendication 1 qui comprend de 75 % à 85 % en poids de trans-1,3,3,3-tétrafluoropropène, de 1 % à 10 % en poids de cis-1,3,3,3-tétrafluoropropène et de 1 % à 10 % en poids de 1,1,3,3,3-pentafluoropropane.

5. Agent gonflant de la revendication 1 qui a un potentiel de réchauffement de la planète de 200 ou moins.

6. Composition d'agent gonflant qui comprend
i) de 50 % à 95 % en poids de l'agent gonflant de la revendication 1 ; et
ii) de 5 % à 50 % en poids d'un co-agent gonflant comprenant un ou plusieurs composants d'hydrofluorocarbones, hydrocarbures en C₁ à C₆, alcools en C₁ à C₈, éthers, diéthers, aldéhydes, cétones, hydrofluoroéthers, chlorocarbones en C₁ à C₄, formiate de méthyle, eau, dioxyde de carbone, hydrofluorooléfines en C₃ à C₄, et hydrochlorofluoro-oléfines en C₃ à C₄.

7. Composition expansible comprenant l'agent gonflant de la revendication 1 et un composant, ou une combinaison de composants, de formation de mousse capable de former une structure de mousse.

8. Composition expansible de la revendication 7 dans laquelle ledit composant de formation de mousse, ou une combinaison de composants, capable de former une structure de mousse comprend au moins un composant thermodurcissable.

9. Composition expansible de la revendication 8 dans laquelle ledit au moins un composant thermodurcissable comprend une composition capable de former une mousse polyuréthane.

10. Composition expansible de la revendication 8 dans laquelle ledit au moins un composant thermodurcissable comprend une composition capable de former une mousse polyisocyanurate.

11. Composition expansible de la revendication 8 dans laquelle ledit au moins un composant thermodurcissable comprend une composition capable de former une mousse phénolique.

12. Composition expansible de la revendication 7 dans laquelle ledit composant, ou une combinaison de composants, de formation de mousse capable de former une structure de mousse comprend au moins un composant thermoplastique.

13. Composition expansible de la revendication 12 dans laquelle ledit au moins un composant thermoplastique comprend une polyoléfine.

14. Procédé pour former une mousse qui comprend la combinaison de a) et b) :
a) un agent gonflant qui comprend de 75 % à 90 % en poids de trans-1,3,3,3-tétrafluoropropène, de 1 % à 15 % en poids de cis-1,3,3,3-tétrafluoropropène, et de 1 % à 15 % en poids de 1,1,3,3,3-pentafluoropropane ;
et
b) un composant, ou une combinaison de composants, de formation de mousse capable de former une structure de mousse.

15. Procédé pour former une mousse qui comprend la combinaison de a) et b) :
a)
i) de 50% à 95 % en poids d'un agent gonflant qui comprend de 75 % à 90 % en poids de trans-1,3,3,3-tétrafluoropropène, de 1 % à 15 % en poids de cis-1,3,3,3-tétrafluoropropène, et de 1 % à 15 % en poids de 1,1,3,3,3-pentafluoropropane ; et
ii) de 5 % à 50 % en poids d'un co-agent gonflant comprenant un ou plusieurs composants d'hydrofluorocarbones, hydrocarbures en C₁ à C₆, alcools en C₁ à C₈, éthers, diéthers, aldéhydes, cétones, hydrofluoroéthers, chlorocarbones en C₁ à C₄, formiate de méthyle, eau, dioxyde de carbone, hydrofluorooléfines en C₃ à C₄, et hydrochlorofluoro-oléfines en C₃ à C₄ ; et
b) un composant, ou une combinaison de composants, de formation de mousse capable de former une structure de mousse.
